# EUROPEAN PATENT APPLICATION

(11) **EP 2 299 724 A2**
(43) Date of publication of application: **23.03.2011**
(21) Application number: 10174813.5
(22) Date of filing: 01.09.2010
(51) Int. Cl.: H04N 13/00

(54) **Video processing system and video processing method**

(30) Priority: 15.09.2009 KR 20090086943
(71) Applicant: Samsung Electronics Co., Ltd., Suwon-si, Gyeonggi-do 442-742 (KR)
(72) Inventor: Yoo, Young Taek, Gyeonggi-do (KR)
(74) Representative: D'Halleweyn, Nele Veerle Trees Gertrudis

(57) **Abstract**

A video processing system and a video processing method are disclosed. It is determined whether a display mode of a display device is a Two-Dimensional (2D) mode or a Three-Dimensional (3D) mode. When the display mode of the display device is the 3D mode and a 2D On Screen Display (OSD) image is to be overlaid on an image being displayed on the display device, the display mode of the display device is switched to the 2D mode so that an image mixed with the 2D OSD image is displayed as a 2D image.

## Description

### BACKGROUND

### 1. Field of the Invention

Exemplary embodiments of the present general inventive concept relate to a video processing system and method to display a Two-Dimensional (2D) image over a binocular parallax image.

### 2. Description of the Related Art

As the human eyes are spaced from each other by a certain distance (about 65mm), they receive horizontally parallel images. This is called binocular parallax, a major factor which causes a Three-Dimensional (3D) effect when an object is viewed. For the 3D effect, an object is captured by two same cameras spaced from each other by the distance between the two eyes and images captured by the left and right cameras are directed to the left and right eyes, respectively. In this manner, a 3D image is produced.

To create 3D images, a video processing system includes a source device and a display device connected to the source device by a High Definition Multimedia Interface (HDMI) cable.

The source device displays a binocular parallax image including a left-eye image and a right-eye image stored in a storage medium on the display device. If a display mode is a 3D mode, the display device projects the left-eye image and the right-eye image alternately, thus creating a 3D image. If the display mode is a 2D mode, the display device projects one of the left-eye and right-eye images, thus creating a 2D image.

It may occur that during displaying a 3D image, the display device displays a 2D On Screen Display (OSD) image being a menu or button to control the source device over the 3D image. In this case, the source device enlarges or contracts the 2D OSD image, mixes the enlarged or contracted 2D OSD image with the binocular parallax image, and outputs the mixed image on the display device. Under circumstances, the 2D OSD image is mixed across the left-eye and right-eye images or with one of the left-eye and right-eye images.

In the 3D mode, the display displays a 3D image by sequentially outputting the left-eye and right-eye images of the binocular parallax image mixed with the 2D OSD image. Compared to outputting only the left-eye or right-eye image of the binocular parallax image mixed with the 2D OSD image, the 2D OSD image may appear overlapped or blurry.

### SUMMARY

Therefore, exemplary embodiments of the present general inventive concept provide a video processing system and method to improve the quality of an OSD image, when the OSD image is overlaid on an image being displayed on a display device.

Additional features and utilities of the present general inventive concept will be set forth in part in the description which follows and, in part, will be obvious from the description, or may be learned by practice of the present general inventive concept.

Exemplary embodiments of the present general inventive concept provide a video processing method includes determining whether a display mode of a display device is a 2D mode or a 3D mode, and when the display mode of the display device is the 3D mode and a 2D OSD image is to be overlaid on an image being displayed on the display device, switching the display mode of the display device to the 2D mode so that an image mixed with the 2D OSD image is displayed as a 2D image.

The video processing method may further include transmitting a binocular parallax image mixed with the 2D OSD image from a source device to the display device, the binocular parallax image including a left-eye image and a right-eye image, when the display mode is switched to the 2D mode.

The binocular parallax image mixed with the 2D OSD image may be transmitted from the source device to the display device, when the display mode is switched to the 2D mode.

One of the left-eye and right-eye images of the binocular parallax image may be mixed with the 2D OSD image.

It may be determined whether the display mode of the display device is the 2D mode or the 3D mode when a 2D OSD display request is received.

It may be periodically determined whether the display mode of the display device is the 2D mode or the 3D mode.

The video processing method may further include returning the display mode to the 3D mode when displaying of the 2D OSD image is terminated.

Exemplary embodiments of the present general inventive concept also provide a video processing method to output and display a binocular parallax image including a left-eye image and a right-eye image on a display device in a source device, includes determining whether to mix the binocular parallax image with a 2D OSD image, determining whether a display mode of the display device is a 3D mode, when the binocular parallax image is to be mixed with the 2D OSD image, switching the display mode of the display device to a 2D mode, when the display mode of the display device is the 3D mode, mixing one of the left-eye and right-eye images of the binocular parallax image with the 2D OSD image, and transmitting the mixed image to the display device, so that the mixed image is displayed as a 2D image.

The mixed image may be transmitted to the display device when the display mode of the display device is switched to the 2D mode.

The video processing method may further include returning the display mode of the display device to the 3D mode and transmitting the left-eye and right-eye images of the binocular parallax image to the display device when the binocular parallax image is not mixed with the 2D OSD image.

Exemplary embodiments of the present general inventive concept also provide a video processing system that includes a source device to output and display a binocular parallax image including a left-eye image and a right-eye image on a display device, and the display device. The source device can determine whether a display mode of a display device is a 2D mode or a 3D mode, and when the display mode of the display device is the 3D mode and a 2D OSD image is to be overlaid on an image being displayed on the display device, the source device to switch the display mode of the display device to the 2D mode so that an image mixed with the 2D OSD image is displayed as a 2D image.

The source device may transmit a binocular parallax image mixed with the 2D OSD image to the display device after the source device switches the display mode of the display device to the 2D mode.

The source device may delay the transmission of the mixed image until the display mode of the display is switched to the 2D mode.

The source device may mix one of left-eye and right-eye images of the binocular parallax image with the 2D OSD image.

The source device may determine whether the display mode of the display device is the 2D mode or the 3D mode, when a 2D OSD display request is received.

The source device may periodically determine whether the display mode of the display device is the 2D mode or the 3D mode.

The source device may return the display mode to the 3D mode, when displaying of the 2D OSD image is terminated.

The source device may include a source controller to control the source device, a video reproducer to reproduce a binocular parallax image recorded in a video recording medium, an OSD generator to generate a 2D OSD image, a scaler to adjust a size of the 2D OSD image, a video mixer to mix the binocular parallax image with the 2D OSD image, a High Definition Multimedia Interface (HDMI) transmitter to transmit an image to the display device, and a Customer Electronics Control (CEC) interface to communicate with the display device in a CEC scheme.

Exemplary embodiments of the present general inventive concept also provide a method of controlling a display of an image on a display apparatus, the method including mixing an image to be displayed on the display apparatus with a Two-Dimensional (2D) On Screen Display (OSD) image, switching a display mode of the display apparatus from a Three-Dimensional (3D) mode to a 2D mode, and displaying the mixed image as a 2D image in the 2D mode.

The method may include where the mixed image that includes the 2D OSD image is a binocular parallax image having a left eye image and a right eye image.

The method may further include determining whether the display apparatus is operating in the 2D mode or the 3D mode, where the display mode is switched to the 2D mode when the operating mode of the display apparatus is determined to be the 3D mode.

Exemplary embodiments of the present general inventive concept also provide a video processing system including a display apparatus, a source device to mix an image to be displayed on the display apparatus with a Two-Dimensional (2D) On Screen Display (OSD) image, to switch a display mode of the display apparatus from a Three-Dimensional (3D) mode to a 2D mode, and to output the mixed image as a 2D image to be displayed in the 2D mode.

The mixed image that includes the 2D OSD image in the video processing system can be a binocular parallax image having a left eye image and a right eye image.

The source device of the video processing system can determine whether the display apparatus is operating in the 2D mode or the 3D mode, and switches the display mode of the display apparatus to the 2D mode when the operating mode of the display apparatus is determined to be the 3D mode.

### BRIEF DESCRIPTION OF THE DRAWINGS

These and/or other features and utilties of the present general inventive concept will become apparent and more readily appreciated from the following description of the embodiments, taken in conjunction with the accompanying drawings of which:
FIG. 1 illustrates a video processing system according to exemplary embodiments of the present general inventive concept;
FIG. 2 is a control block diagram illustrating the video processing system according to exemplary embodiments of the present general inventive concept;
FIG. 3 illustrates a binocular parallax image in which a left-eye image is mixed with a Two-Dimensional (2D) On Screen Display (OSD) image by a source device illustrated in FIG. 2, and a 2D image of the binocular parallax image mixed with the 2D OSD image according to exemplary embodiments of the present general inventive concept;
FIG. 4 is a diagram illustrating a signal flow of a video processing method in the video processing system according to exemplary embodiments of the present general inventive concept;
FIG. 5 illustrates video processing according to the control operation illustrated in FIG. 4 according to exemplary embodiments of the present general inventive concept; and
FIG. 6 illustrates a video processing system including a source device and a display device having an OSD generator according to exemplary embodiments of the present general inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

A Three-Dimensional (3D) image may be viewed with or without 3D glasses.

The principle of 3D imaging with 3D glasses is based on binocular parallax. Specifically, a 3D image can be perceived at the brain of a viewer by presenting separately captured left-eye and right-eye images to the left and right eyes of the viewer, respectively, through 3D glasses. The 3D glasses can include polarized glasses and time-division shutter glasses. The polarized glasses can separate left-eye and right-eye images by shielding one or more images according to the polarization directions of orthogonal polarization devices. The time-division shutter glasses can separate left-eye and right-eye images by blocking and passing light through shutters that can be mounted on glasses in synchronization with the left-eye and right-eye images to create a 3D image.

The basic principle of creating a 3D image without 3D glasses can be similar to the 3D imaging using 3D glasses in that stereoscopy relies on binocular parallax and the former differs from the latter in that instead of 3D glasses, devices to separate left-eye and right-eye images can be installed in front of a screen on which an image is displayed to provide the left-eye and right-eye images to the left and right eyes of a viewer, respectively. That is, the devices installed in from of the screen on which an image is displayed manipulate light from a displayed image so that a viewer perceives a 3D image. A parallax barrier and a lenticular scheme can obviate the need for wearing 3D glasses to view a 3D image. When the parallax barrier is used, the viewer can view an image through an opening without 3D glasses. In the lenticular scheme, an array of small lenses can be installed instead of a barrier, where the array of lenses manipulates light of a displayed image so that a viewer perceives a three-dimensional image.

A video processing system according to exemplary embodiments of the present general inventive concept can be applied to both 3D imaging with 3D glasses and 3D imaging without 3D glasses.

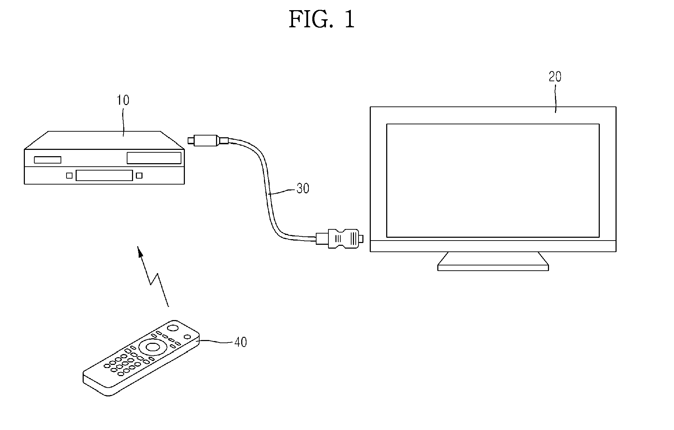

FIG. 1 illustrates a video processing system according to exemplary embodiments of the present general inventive concept.

Referring to FIG. 1, the video processing system according to the exemplary embodiments of the present general inventive concept can include a source device 10 to output a binocular parallax image including a left-eye image and a right-eye image and a display device 20 to receive the binocular parallax image from the source device 10 and display the binocular parallax image. A cable 30 can communicatively couple the source device 10 to the display device 20, so that the binocular parallax images can be provided from the source device 10 to the display device 20. The source device 10 is connected to the display device 20 by a High Definition Multimedia Interface (HDMI) cable (e.g., cable 30) according to the High Definition Multimedia Interface Consumer Electronics Control (HDMI-CEC) standard. Alternatively, the binocular parallax images including a left-eye image and a right-eye image can be transmitted from the source device to the display device via a wireless link. A remote control 40 can control the operation (e.g., control the display of video images) of the source device 10 and/or the display device 20.

HDMI can include a High Definition (HD) video signal with a multi-channel audio signal using a single digital interface with a bandwidth of 5Gbps or above by integrating an Red, Green Blue (RGB) channel, a luminance Y channel, and a chrominance Cr/Cb channel with an audio channel into one channel. HDMI can have three independent communication channels: a Transition Minimized Differential Signaling (TMDS) channel, a Display data Channel (DDC), and a Consumer Electronics Control (CEC) channel. HDMI devices may exchange video data, device information, and control commands with each other through the communication channels.

The source device 10 and the display device 20 may be connected to a network by, for example, a CEC communication channel and exchange a plurality of information with each other through CEC communication. The source device 10 can receive display mode information indicating whether a current display mode is a Two Dimensional (2D) or 3D mode from the display device 20 via a CEC line. Apart from the HDMI-CEC, the source device 10 may determine the current display mode of the display device 20 by bi-directional communication with the display device 20, where the communication medium may include, for example, Ethernet communication.

When the source device 10 is notified of the current display mode of the display device 20 via a communication, the source device can can mix a 2D On Screen Display (OSD) image with a binocular parallax image, the source device 10 can force, command, and/or request the display device 20 to transition to the 2D mode to display the 2D OSD image on the display device 20. That is, the display device 20 can display a 2D image. The source device 10 can mix the 2D OSD image with the binocular parallax image according to the current display mode of the display device 20 so as to improve the video quality of the 2D OSD image.

The source device 10 can output a binocular parallax image including left-eye and right-eye images stored in a storage medium (e.g., where the storage medium is received by the source device 10, is mounted in the source device 10, and/or is received in an interface of the storage device 10) to the display device 20. The display device 20 can generate a 3D image by alternately projecting the left-eye image in an enlarged size or a predetermined normal size, and the right-eye image in an enlarged size or a predetermined normal size.

The source device 10, which supports 3D imaging, can form a frame with a binocular parallax image with a left-eye image and a right-eye image arranged in a side by side layout or in a top and bottom layout. The display device 20 can receive the binocular parallax image and display only the left-eye image in an enlarged size or in a predetermined normal size and then only the right-eye image in an enlarged size or in a predetermined normal size. That is, the display device 20 can display the left-eye image and the right-eye image alternately so as to generate a 3D image.

The source device 10 and the display device 20 can be CEC-connected by the HDMI cable (e.g., cable 30 illustrated in FIG. 1) so that they may operate according to a mutual device control function and/or command (e.g., an input command received from the remote control 40). A menu and/or manipulation button to control the source device 10 can be displayed on the display device 20. The source device 10 can generate an OSD signal according to an OSD generation command received, for example, from the remote control 40 and/or other input unit and can display the OSD signal on the display device 20.

In exemplary embodiments of the present general inventive concept, a 2D OSD image can be overlaid on a 3D image that is displayed on the display device 20. The source device 10 can mix the 2D OSD image with a binocular parallax image and output the mixed image to the display device 20. If the display device 20 is in the 2D mode, the display device 20 can display a 2D image by outputting one of the left-eye and right-eye images of the mixed image.

When the display device 20 is in the 3D mode, the display device 20 can display a 3D image based on binocular parallax by sequentially outputting the left-eye and right-eye images of the mixed image.

When the source device 10 outputs the mixed image to the display device 20 in the 3D mode, the 2D OSD image may appear overlapped or blurry because the left-eye and right-eye images of the mixed image are sequentially output.

When the source device 10 outputs the mixed image, it can be determined whether the display device 20 is in the 2D or 3D mode in accordance with exemplary embodiments of the present general inventive concept. When the display device 20 is in the 3D mode, the display device 20 can receive a command and/or instruction to transition to the 2D mode. Thus, only an image mixed with the 2D OSD image between the left-eye and right-eye images can be output to a display panel of display device 20, thus generating a 2D image. As the 2D OSD image does may not appear overlapped or blurry, the video quality of the 2D OSD image can be improved.

In the video processing system according to exemplary embodiments of the present general inventive concept, the source device 10 may be an HD DVD player, Blueray DVD Player (BDP) or an HD broadcasting receiver, Set-Top Box (STB), or the like. The display device 20 may be a TV, a projector, etc.

For convenience and clarity of description, the following description will be made in the context of a BDP as the source device 10.

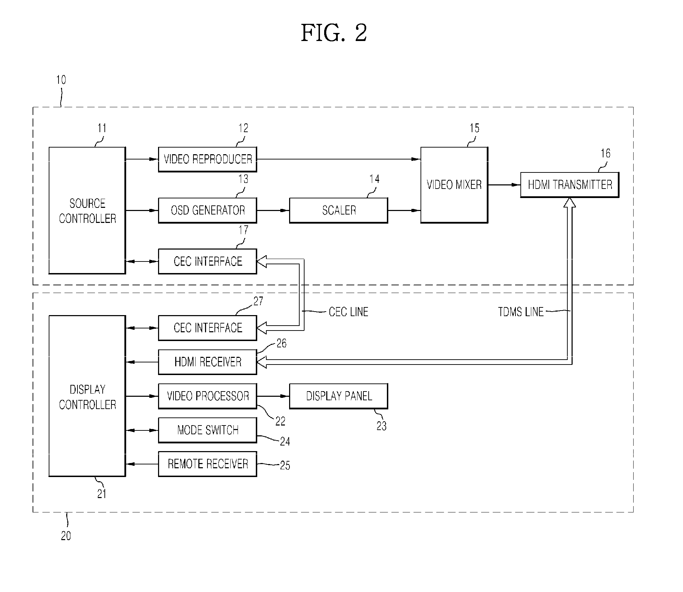

Referring to FIG. 2, the source device 10 can include a source controller 11 to control to the source device 10, a video reproducer 12 to play a video stored in a video recording medium, an OSD generator 13 to generate an OSD image, a scaler 14 to adjust the size of the OSD image by enlarging or contracting the OSD image, a video mixer 15 to mix a played image with the OSD image, an HDMI transmitter 16 to transmit an image to the display device 20, and a CEC interface 17 to transmit and receive a common control signal, i.e. a CEC message to and from the display device 20.

The video reproducer 12 can read compressed left-eye and right-eye images from a video recording medium such as a DVD, an HDD, etc., recover the compressed left-eye and right-eye images to original left-eye and right-eye images by a decoder, and play and/or output a binocular parallax image (e.g., a binocular parallax image signal) with the recovered left-eye and right-eye images. The binocular parallax image can be output to the display device 20 through the video mixer 15 and the HDMI transmitter 15.

The OSD generator 13 can generate an OSD image which can be a menu and/or manipulation button to control the source device 10. The OSD image can be a 2D image. That is, the generated menu and/or manipulation button by the OSD generator 13 can receive input to control the source device 10.

The scaler 14 can adjust the OSD image received from the OSD generator 13 to a desired size (e.g., a predetermined size, a selected size, and/or any other suitable size to carry out the exemplary embodiments of the present general inventive concept) by enlarging and/or contracting the OSD image.

The video mixer 15 can mix the binocular parallax image received from the video reproducer 12 with the OSD image received from the OSD generator 13 and can output the resulting mixed image to the display device 20 through the HDMI transmitter 16. When the video mixer 15 does not receive an OSD image from the OSD generator 13, the video mixer 15 can output a binocular parallax image received from the video reproducer 12 to the display device 20. When the video mixer 15 does not receive a binocular parallax image from the video reproducer 12, the video mixer 15 can outputs an OSD image received from the OSD generator 13 to the display device 20.

The HDMI transmitter 16 can transmit the image output from the video mixer 15 to an HDMI receiver 26 of the display device 20 via a TMDS line connected to the HDMI receiver 26.

The CEC interface 17 can exchange information with a CEC interface 17 of the display 20 via a CEC line which is a bi-directional bus connected to the CEC interface 17. The CEC interface 17 can transmit a CEC message requesting information about the display mode of the display device 20 to the CEC interface 27 of the display device 20, receive a response CEC message from the CEC interface 27 of the display device 20, interpret the response CEC message, and provide the interpretation result, that is, display mode information to the source controller 11. The display mode information can include information indicating whether the display mode of the display device 20 is 2D or 3D. The CEC interface 17 may be replaced with a source commutation module having Ethernet communication.

The source controller 11 can include a microprocessor to control to the source device 10, including video reproduction, OSD generation, video mixing, video transmission, and CEC processing according to one or more programs and applications. Alternatively, the source controller 11 can be a field programmable gate array, a programmable logic device, an application specific integrated circuit, and/or any other suitable processor to carry out the exemplary embodiments of the present general inventive concept.

The source controller 11 can reproduce a binocular parallax image including compressed left-eye and right-eye images recorded in a video recording medium such as a DVD, an HDD, etc. through the video reproducer 12. The source controller 11 can transmit the reproduced binocular parallax image to the display device 20 through the HDMI transmitter 16. The display device 20 can display the binocular parallax image as a 2D or 3D image according to the display mode of the display device 20.

In exemplary embodiments of the present general inventive concept, an OSD image can be mixed with a binocular parallax image, where the source controller 11 generates a 2D OSD image through the OSD generator 13, mixes the 2D OSD image with the binocular parallax image through the video mixer 15, and transmits the mixed image to the display device 20 through the HDMI transmitter 16. Accordingly, the display device 20 can display the mixed image as a 2D image or as both 2D and 3D images according to the display mode of the display device 20.

In exemplary embodiments of the present general inventive concept, an OSD image can be mixed with a binocular parallax image, where the source controller 11 can receive display mode information indicating whether the display mode of the display device 20 is 2D or 3D by communicating with the display device 20 through the CEC interface 17, before the OSD image is mixed with the binocular parallax image, and can determine the display mode of the display device 20 according to the display mode information.

In exemplary embodiments of the present general inventive concept, when a 2D OSD image with a binocular parallax image and the display device 20 may be set in the 2D mode, the source controller 11 can mix the 2D OSD image with one of the left-eye and right-eye images of the binocular parallax image and can transmit the mixed image to the display device 20 through the HDMI transmitter 16. The source controller 11 can transmit video mixing information of the left-eye or right-eye image mixed with the 2D OSD image to the display device 20 through the CEC interface 17. Thus, the display device 20 can display the left-eye or right-eye image mixed with the 2D OSD image as a 2D image. The 2D OSD image may not appear overlapped or blurry and thus the video quality of the 2D OSD image may be improved.

The source controller 11 may transmit only the mixed image including one of the left-eye and right-eye images and the 2D OSD image (i.e. left-eye image+2D OSD image or right-eye image+2D OSD image) to the display device 20 through the HDMI transmitter 16. Video mixing information indicating which one of the left-eye or right-eye image is mixed with the 2D ODS image may not be provided to the display device 20. In exemplary embodiments of the present general inventive concept, when there is no further mixing of the 2D OSD image, the source controller 11 can transmit left-eye and right-eye images to the display device 20, simultaneously, with returning the display mode of the display device 20 to the 3D mode.

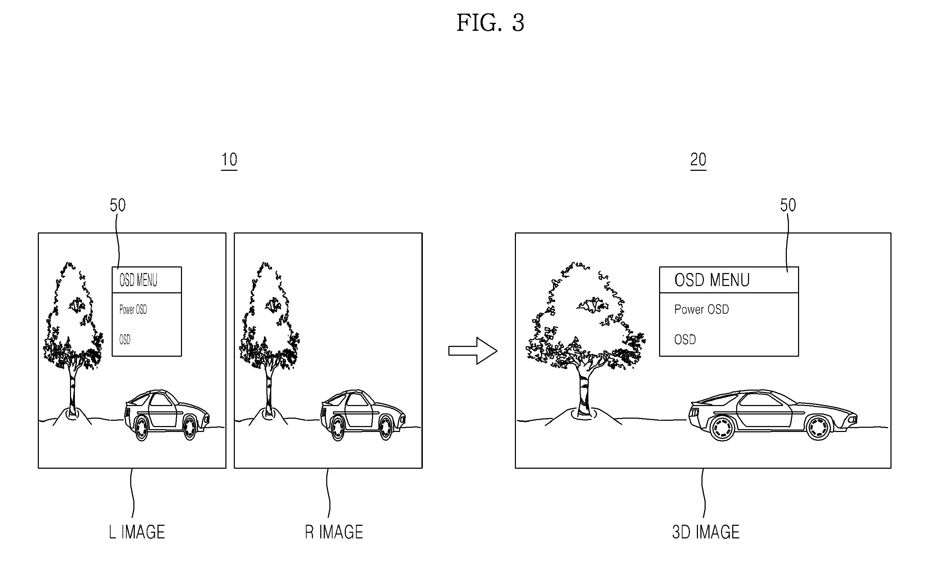

In exemplary embodiments of the present general inventive concept, a 2D OSD image with a binocular parallax image and the display device 20 is currently in the 3D mode, the source controller 11 can control the display device 20 to transition to the 2D mode by communicating with the display device 20 through the CEC interface 17, before the 2D OSD image is mixed with the binocular parallax image. The source controller 11 can mix the 2D OSD image with one of the left-eye (L) and right-eye (R) images of the binocular parallax image (refer to the L image in FIG. 3) and can transmit the mixed image to the display device 20 through the HDMI transmitter 16. The source controller 11 can transmit video mixing information indicating the left-eye or right-eye image mixed with the 2D OSD image to the display device 20 through the CEC interface 17. The display device 20 can determine which image between the left-eye and right-eye images was mixed with the 2D OSD image according to the video mixing information and can display only the determined image as a 2D image (refer to a 2D image in FIG. 3). The 2D OSD image may not appear overlapped or blurry and thus the video quality of the 2D OSD image may be improved.

The source device 10 may include a remote receiver 25 to receive a signal from a remote control 40. In exemplary embodiments of the present general inventive concept, the source device 10 can receive a command to display an OSD image with which to control the source device 10 on the display 20 by transmitting a signal to a remote receiver 25 of the display device 20 with the remote control 40 using an HDMI-CEC command and/or message to control the display device 20.

Referring to FIG. 2 again, the display device 20 can include a display controller 21 to provide overall control to the display device 20, a video processor 22 to process an image received from the source device 10 to a format to be displayed on a display panel 23, the display panel 23 to display a final image, a mode switch 24 to switch the display mode of the display device 20 to the 2D or 3D mode, the remote receiver 25 to receive a signal from the remote controller, the HDMI receiver 26 to receive an image from the source device 10, and the CEC interface 27 to exchange CEC messages with the source device 10.

The mode switch 24 can switch the display mode of the display device 20 to the 2D or 3D mode. In the 2D mode, the display device 20 can display only one of the left-eye and right-eye images of a binocular parallax image received from the source device 10 as a 2D image. In the 3D mode, the display device 20 can display a 3D image according to binocular parallax by sequentially outputting the left-eye and right-eye images of a binocular parallax image received from the source device 10.

The remote receiver 25 can receive a signal from the remote control 40.

The video processor 22 can process an image received from the HDMI receiver 26 according to whether the display device 20 is in the 2D or 3D mode as well as process the video quality, size, etc. of the image according to one or more predetermined parameters (e.g., one or more image size parameters, image resolution parameters, etc.). In the 3D mode, the video processor 22 can display a 3D image according to a binocular parallax on the display panel 23 by sequentially outputting the left-eye and right-eye images of the image received from the HDMI receiver 26. In the 2D mode, the video processor 22 can display a 2D image on the display panel 23 by outputting only one of the left-eye and right-eye images of the image received from the HDMI receiver 26.

The display panel 23 can display an image received from the video processor 22. The display panel 23 can include light emitting modules arranged in the form of a square and/or rectangle, each light emitting module including a plurality of light emitters. For example, the display panel 23 can be a Light Emitting Diode (LED), an Organic Light Emitting Diode (OLED), or Liquid Crystal Display (LCD) panel.

The HDMI receiver 26 can receive an image from the source device 10 via a TMDS line connected to the HDMI transmitter 16 of the source device 10.

The CEC interface 27 can exchange information with the CEC interface 17 of the source device 10 via a bi-directional bus, that is, a CEC line connected to the CEC interface 17. The CEC interface 27 can receive a CEC message from the source device 10, interpret the received CEC message, and output the interpretation result to the display controller 21. The CEC interface 27 can receive a CEC message carrying display mode information about the display device 20 from the display controller 21 and can transmit the CEC message to the CEC interface 17 of the source device 10. As described above, the display mode information can include information indicating whether the display device 20 is in the 2D or 3D mode. The CEC interface 27 may be replaced with a display communication module supporting Ethernet communication.

The display controller 21 can process an image received from the HDMI receiver 26 through the video processor 22 according to whether the display device 20 is in the 2D or 3D mode. Specifically, when the display mode of the display device 20 is the 3D mode, the display controller 21 can display a 3D image according to binocular parallax on the display panel 23 by sequentially outputting the left-eye and right-eye images of the image received from the HDMI receiver 26. When the display mode is the 2D mode, the display controller 21 can display a 2D image on the display panel 23 by outputting only one of the left-eye and right-eye images of the image received from the HDMI receiver 26.

The display controller 21 can collect display mode information about the display device 20 upon receipt of a display mode information request through the CEC interface 27 and/or periodically, and can transmit the collected display mode information to the source device 10 through the CEC interface 27. Therefore, the source device 10 may identify whether the display mode of the display device 20 is the 2D or 3D mode.

The display controller 21 can receive video mixing information indicating which one of left-eye or right-eye images is mixed with a 2D OSD image through the CEC interface 27, can receive the left-eye or right-eye images of a binocular parallax image mixed with the 2D OSD image through the HDMI receiver 26, and can determine whether the display device 26 is in the 2D or 3D mode. When the display device is in the 3D mode, the display controller 21 can display a 3D image by sequentially outputting the left-eye and right-eye images of the mixed image to the display panel 23 through the video processor 22. The 2D OSD image may appear overlapped or blurry. When the display device 20 is in the 2D mode, the display controller 21 can display a 2D image by outputting only the image mixed with the 2D OSD image between the left-eye and right-eye images of the mixed image to the display panel 23 through the video processor 22 so that the 2D OSD image does not appear overlapped or blurry.

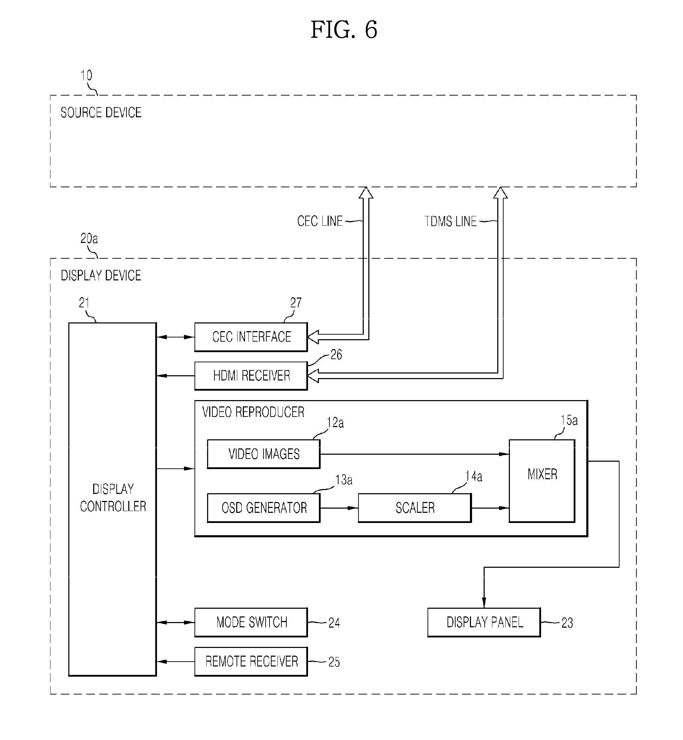

FIG. 6 illustrates a video processing system including a source device 10 and a display device 20a having a video processor 22a including an OSD generator 13a, a scaler 14 and a mixer 15a according to exemplary embodiments of the present general inventive concept. The source device 10 may be the same as described above, or, alternatively, may not include one or more of the OSD generator 13, the scaler 14a, and the video mixed 15. The display device 20a can include a CEC interface 27, a HDMI receiver 26, a mode switch 24, the display panel 23 and the remote receiver 25, which are described above in detail.

In the video processing system illustrated in FIG. 6, the HDMI receives video signals via the TDMS line with the HDMI receiver 26. The display controller 21 can provide the video signal from the HDMI receiver to the video processor 22a. Video images 12a can be the video images received from the HDMI processor to be combined with OSD images generated by the OSD generator 13a. The scaler 14a can adjust the size of the OSD image generated by the OSD generator 13a by enlarging or contracting the OSD image, and the video mixer 15a can mix the video images 12a with the generated and scaled OSD image. The output of the video mixer 15a that includes the video images and the OSD images can be displayed on a display panel 23 as described above.

Here, when the images to be displayed are in a 2D mode, the display controller 21 may not change to the 2D mode to insert the OSD images. However, when in the 3D mode, the display controller 21 may change the 3D mode into the 2D mode to insert the OSD images thereto in a similar method as described above in connection with FIGS. 1-5.

FIG. 3 illustrates a binocular parallax image including a right-eye image and a left-eye image that is mixed with a 2D OSD image, and a 2D image of the mixed image on the display device 20 according to exemplary embodiments of the present general inventive concept.

Referring to FIG. 3, the source device 10 can mix only the left-eye (L) image with a 2D OSD image 50 and can output only the L image mixed with the 2D OSD image 50 to the display panel 23. As the display panel 23 can display the mixed image as a 2D image, the 2D OSD image can appear clear without overlapping or blur.

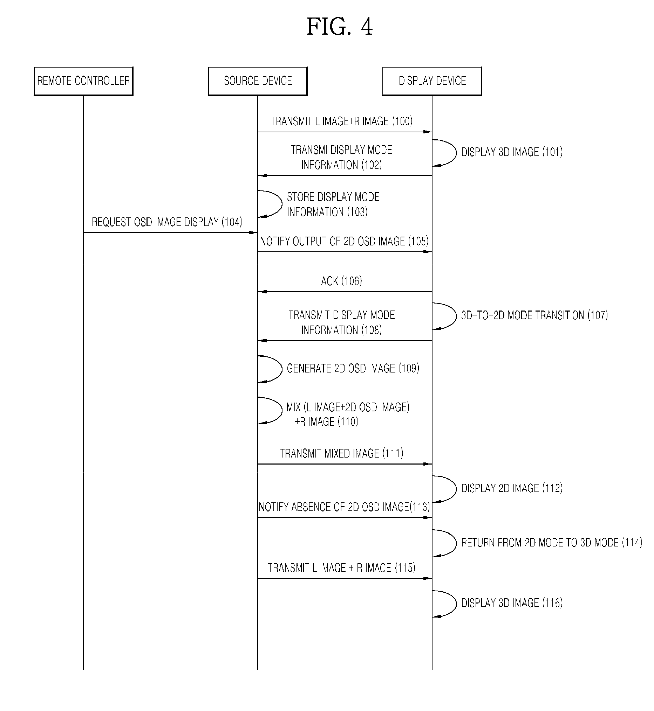

FIG. 4 is a diagram illustrating a signal flow for a video processing method in the video processing system according to exemplary embodiments of the present general inventive concept. For convenience and clarity of description, it is assumed that the display device 20 operates initially in the 3D mode and displays a binocular parallax image received from the source device 10 in the 3D mode.

Referring to FIG. 4, the source device 10 can transmit a left-eye (L) image and a right-eye (R) image recorded in a video recording medium such as a DVD, an HDD, etc. to the display device 20 by playing the video recording medium at operation 100.

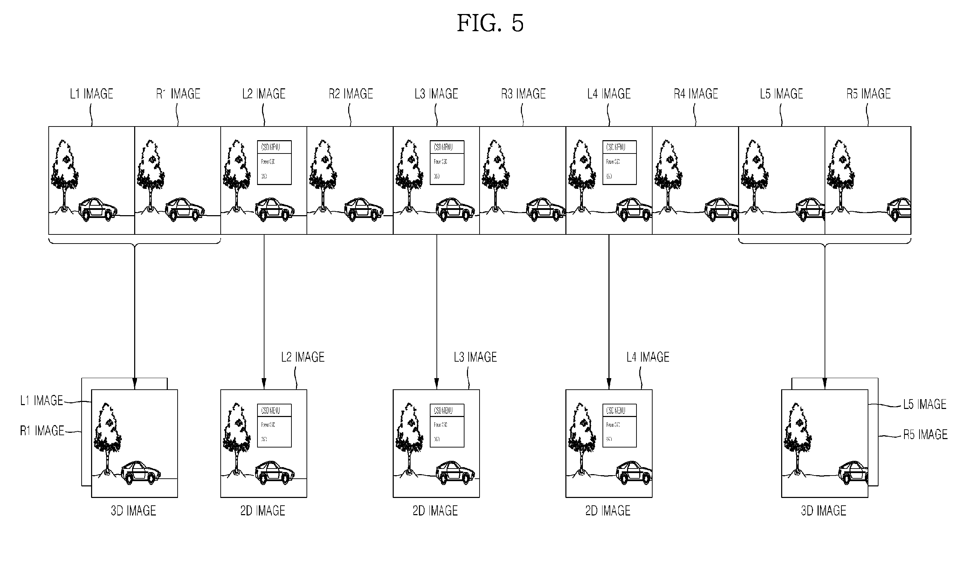

The display device 20 can display a 3D image by alternately outputting the left-eye and right-eye images received from the source device 10 to the display panel 23 at operation 101 (refer to images L1 and R1 in FIG. 5).

In operation 102, the display device 20 can transmit to the source device 10 display mode information indicating whether the current display mode of the display device 20 is the 2D or 3D mode when displaying the 3D image.

Upon receipt of the display mode information, the source device 10 can identify the current display mode of the display device 20 as the 3D mode by analyzing the display mode information and can store the display mode information in its memory in step 103.

Upon receipt of an OSD display request via the remote control 40 and/or other input device in operation 104, the source device 10 can notify the display device 20 that a 2D OSD image can be output by transmitting 2D OSD output indication information in operation 105. The display device 20 can transmit an ACKnowledgment (ACK) signal including information about a time to transition from the 3D mode to the 2D mode in operation 106. In operation 107, the display device 20 can transition from the 3D mode to the 2D mode according to a command and/or control signal. Along with the mode transition, the display device 20 can transmit display mode information indicating the 2D mode to the source device in operation 108. When transitioning from the 2D mode to the 3D mode, the display device 20 may notify the user that the display mode can switch from the 3D mode to the 2D mode, before the mode transition. If the user does not want the mode transition, the display device 20 may be maintained in the 3D mode.

Upon receipt of the ACK signal, the source device 10 can generate a user-requested 2D OSD image in operation 109, can mix the 2D OSD image with a binocular parallax image, for example, only with the left-eye image of the binocular parallax image in operation 110, and can transmit the mixed image to the display device 20 after a predetermined amount of time, taking into account the mode transition time of the display device 20 in operation 111. The source device 10 can transmit to the display device 20 video mixing information indicating that the left-eye image was mixed with the 2D OSD image.

Upon receipt of the left-eye image mixed with the 2D OSD image, the right-eye image of the binocular parallax image, and the video mixing information from the source device 10, the display device 20 can display a 2D image by outputting only the left-eye image mixed with the 2D OSD image to the display panel 23 according to the video mixing information in step 112 (refer to images L2, L3 and L4 in FIG. 5). The 2D OSD image can be displayed clear without overlapping or blur, thus improving the video quality of the 2D OSD image.

When displaying of the 2D OSD image is terminated after a predetermined period of time or by a received input during displaying the 2D image, the source device 10 can notify the display device 20 that the 2D OSD image is not displayed any longer by transmitting information indicating outputting of left-eye (L) and right-eye images without the 2D OSD image to the display device 20 in operation 113.

In operation 114, the display device 20 can switch the display mode from the 2D mode to the 3D mode. The source device 10 can transmit the left-eye and right-eye images which are not mixed with the 2D OSD image to the display device 20 in operation 115.

Then the display device 20 can display a 3D image by sequentially outputting the received left-eye and right-eye images to the display panel 23 in operation 116 (refer to images I5 and R5 in FIG. 5).

FIG. 5 illustrates screens that display video frames output from the source device as 2D or 3D images according to the video processing method according to exemplary embodiments of the present general inventive concept.

Referring to FIG. 5, video frames in an upper part of FIG. 5 can be consecutive video frames output from the source device 10 to the display device 20. Each of the video frames includes a pair of left-eye and right-eye images, L1 and R1, L2 and R2, L3 and R3, L4 and R4, or L5 and R5.

Among the consecutive video frames, the images L2, L3, and L4 can be mixed with 2D OSD images.

When the source device 10 outputs the consecutive video frames to the display device 20, the display device 20 can display the video frames without 2D OSD images, L1 and R1, and L5 and R5 as 3D images.

The display device 20 can display the video frames with 2D OSD images, L2 and R2, L3 and R3, and L4 and R4 as 2D images so that the 2D images do not appear overlapped or blurry.

As is apparent from the above description, when a 2D OSD image is overlaid on a 3D image based on binocular parallax being displayed on a display device, the 2D OSD image can be displayed normally without overlapping or blur according to the exemplary embodiments of the present general inventive concept a disclosed herein.

Although several embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. A video processing method comprising:
determining whether a display mode of a display device is a Two-Dimensional (2D) mode or a Three-Dimensional (3D) mode; and
forcing, if the display mode of the display device is the 3D mode and a 2D On Screen Display (OSD) image is to be overlaid on an image being displayed on the display device, the display mode of the display device to switch to the 2D mode so that an image mixed with the 2D OSD image is displayed as a 2D image.

2. The video processing method according to claim 1, further comprising transmitting a binocular parallax image mixed with the 2D OSD image from a source device to the display device, the binocular parallax image including a left-eye image and a right-eye image, after the display mode is forced to switch to the 2D mode.

3. The video processing method according to claim 2, wherein the transmission comprises transmitting the binocular parallax image mixed with the 2D OSD image from the source device to the display device, when the display mode is completely switched to the 2D mode.

4. The video processing method according to claim 2, wherein one of the left-eye and right-eye images of the binocular parallax image is mixed with the 2D OSD image.

5. The video processing method according to claim 1, wherein the determination comprises determining whether the display mode of the display device is the 2D mode or the 3D mode, upon receipt of a 2D OSD display request from a user.

6. The video processing method according to claim 1, wherein the determination comprises periodically determining whether the display mode of the display device is the 2D mode or the 3D mode.

7. The video processing method according to claim 1, further comprising returning the display mode to the 3D mode, if displaying of the 2D OSD image is terminated.

8. A video processing system comprising:
a source device to output and display a binocular parallax image including a left-eye image and a right-eye image on a display device; and
the display device,
wherein the source device determines whether a display mode of a display device is a Two-Dimensional (2D) mode or a Three-Dimensional (3D) mode, and if the display mode of the display device is the 3D mode and a 2D On Screen Display (OSD) image is to be overlaid on an image being displayed on the display device, forces the display mode of the display device to switch to the 2D mode so that an image mixed with the 2D OSD image is displayed as a 2D image.

9. The video processing system according to claim 8, wherein the source device transmits a binocular parallax image mixed with the 2D OSD image to the display device after the source device forces the display mode of the display device to switch to the 2D mode.

10. The video processing system according to claim 9, wherein the source device delays the transmission of the mixed image until the display mode of the display is completely switched to the 2D mode.

11. The video processing system according to claim 9, wherein the source device mixes one of left-eye and right-eye images of the binocular parallax image with the 2D OSD image.

12. The video processing system according to claim 8, wherein the source device determines whether the display mode of the display device is the 2D mode or the 3D mode, upon receipt of a 2D OSD display request from a user.

13. The video processing system according to claim 8, wherein the source device periodically determines whether the display mode of the display device is the 2D mode or the 3D mode.

14. The video processing system according to claim 8, wherein the source device returns the display mode to the 3D mode, if displaying of the 2D OSD image is terminated.

15. The video processing system according to claim 8, wherein the source device includes a source controller to provide overall control to the source device, a video reproducer to reproduce a binocular parallax image recorded in a video recording medium, an OSD generator to generate a 2D OSD image, a scaler to adjust a size of the 2D OSD image, a video mixer to mix the binocular parallax image with the 2D OSD image, a High Definition Multimedia Interface (HDMI) transmitter to transmit an image to the display device, and a Customer Electronics Control (CEC) interface to communicate with the display device in a CEC scheme.
